# EUROPEAN PATENT APPLICATION

(11) **EP 4 707 232 A2**
(43) Date of publication of application: **11.03.2026**
(21) Application number: 25192417.1
(22) Date of filing: 29.07.2025
(51) Int. Cl.: C01B 3/065

(54) **HYDROGEN GENERATION SYSTEM**

(30) Priority: 01.08.2024 US 202418792405
(71) Applicant: ImaGEN Inc., Columbia South Carolina 29208 (US)
(72) Inventor: PATTON, John, Lebanon (US); SEFTICK, Ronald, Elgin (US)
(74) Representative: Piotrowicz, Pawel Jan Andrzej

(57) **Abstract**

A hydrogen generation system with controlled water distribution is disclosed. The system comprises a reaction chamber containing a hydrogen-producing fuel, a liquid distribution mechanism, and a control system. The liquid distribution mechanism includes a rotating arm with liquid injection ports that move vertically through the fuel chamber. This allows for precise and efficient liquid delivery to unreacted fuel, optimizing hydrogen production. A proprietary fuel blend utilizes chemicals that store significant amounts of hydrogen in a solid-state form. A feature of the device is the arm's controlled vertical movement, achieved through a screw mechanism that adjusts the arm's height as it rotates, creating a spiral liquid distribution pattern. The control system regulates liquid injection rates, arm rotation speed, and vertical movement to optimize hydrogen production based on demand. The system can also operate at low pressures and be scaled to different sizes in a safer, more efficient, on-demand manner.

## Description

### Background of the Invention

Hydrogen has many applications in scientific research and industry. However, its greatest potential application is as an energy source for electricity-generating fuel cells and other energy production capabilities.

Steam methane reforming is currently the most common and least expensive method of producing hydrogen. Coal can also be reformed to produce hydrogen through gasification. Hydrogen production by CO₂-emitting-free methods is either more expensive than fossil fuels or is in the early stages of development. The United States has more proven coal reserves than any other country, so coal-based hydrogen production technology is the most attractive. However, effective and low-cost carbon sequestration technology has to be developed.

Hydrogen is regarded as the energy for the future; there is a need to use other energy sources to produce and use hydrogen by direct combustion or in a fuel cell. Thus, hydrogen or the use of any material in producing energy cannot be an environmentally clean and economically viable solution unless there is a method to sequester carbon in an economically viable way. The use of hydrogen is being promoted on a federal level with massive support from United States Department of Energy, and the future involves the use of hydrogen solutions for transportation and other energy uses. A solution to reduce dependency on fossil fuels and simultaneously be economical embodiments of the current invention allows for the alternate methods of using coal, producing hydrogen and hydrides. Many hydrides are currently being used in onboard hydrogen generation, and the cost of producing the hydride is an important consideration. This invention is unique because although carbon is used in hydrogen production, the carbon is sequestered simultaneously as hydrogen is produced and hydrogen is reacted with suitable metals to produce hydrides.

Coal is used extensively to produce synthetic fuels. The use of coal in gasifiers is well established, and the reaction may produce hydrogen: C+2H₂O=CO₂+2H₂. Gasifiers are operated between 800 and 1500 K, depending on the conditions involving steam, oxygen, and/or air, a mixture of CO₂, CO, H₂, CH₄, and water. The CO produced can be further processed by the shift-gas reaction to produce H₂ with the production of CO₂: CO+H₂O=CO₂+H₂.

The following is an extract from "The Hydrogen Economy: Opportunities, Costs, Barriers, and R&D Needs (2004), National Academy of Engineering (NAE), Board on Energy and Environmental Systems (BEES)" and shows the importance of the present project: "Carbon Emissions Associated with Current Hydrogen Production. At the present time, global crude hydrogen production relies almost exclusively on processes that extract hydrogen from fossil fuel feedstock. It is not current practice to capture and store the by-product CO₂ that results from hydrogen production from these feedstocks. Consequently, more than 100 Mt C/year are vented to the atmosphere as part of the global production of roughly 38 Mt hydrogen per year."

When coal is used in gasifiers or indirect burning in power and other manufacturing plants, CO₂ and CO are prominent among other gases. Their emission in the atmosphere harms the environment and as considered here, is also a waste of resources. This has been an economic and someone else's problem for the industry. This invention will provide a clear economic incentive to sequester carbon (CO₂ and CO) without significantly affecting the current inventions' modes of operations. Embodiments of the current invention consider several such processes.

Hydrogen gas can be safely transported, handled, and distributed in gaseous form when stored in high-pressure compressed gas cylinders for scientific research and industrial applications; however, such methods of hydrogen gas storage in high-pressure cylinders or even cryogenic storage of liquid hydrogen, are considered too dangerous for widespread use in commercial and private motor vehicles.

An alternative method for generating hydrogen (H₂) gas on-demand at the time and point of use, in large or small quantities, can be implemented safely using the well-known chemical reaction that release hydrogen when introduced with water or other liquids. These types of reactions are known as hydrogen hydrolysis. An example of this is the reaction between sodium (Na) metal and ordinary water (H₂O). Most everyone remembers from their first-year chemistry course when a small piece of sodium is added to a beaker full of water, the sodium (Na) metal floats on the surface while racing and sizzling on the surface of the water because of being less dense than water, and due to hydrogen (H₂), gas is generated as it reacts with the water, respectively. The reaction between sodium metal and water produces hydrogen gas and sodium hydroxide according to the chemical equation: 2Na+2H₂O→2NaOH+H₂. None of the precursor chemicals, including sodium (Na) metal or water (H₂O) or the product chemicals, hydrogen (H₂) gas, and sodium hydroxide (NaOH) are toxic, excessively dangerous, or costly. Therefore, this method of generating hydrogen can be applied safely to generate hydrogen gas for fuel cells to power commercial and private electric motor vehicle transport.

Moreover, the product of the hydrogen-generating chemical reaction between sodium (Na) metal and water (H₂O), namely, sodium hydroxide (NaOH), can be recovered and recycled using chemical electrolysis at an appropriate plant designed for the task of recovering the sodium (Na) metal in an environmentally clean process that yields zero pollution and allows the recovered sodium metal to be used for repeat hydrogen generation by reacting with water. The process of chemical electrolysis of NaOH requires electrical energy to chemically separate sodium (Na) metal from sodium hydroxide (NaOH) according to the reaction: 2NaOH+2e-→2Na+ H₂O+1/2O₂. The products of electrolysis of sodium hydroxide (NaOH) yield the recovered sodium (Na) metal, water (H₂O), and oxygen (O₂), the latter two substances forming natural constituents of the atmosphere and considered to be non-polluting. The electrical energy for large-scale reprocessing of NaOH via the electrolytic process can be obtained from large hydroelectric or nuclear power plants.

### Description of Prior Art

The development of the Tru-H₂ hydrogen generation system was motivated by several key factors in the current hydrogen production and storage landscape. Traditional hydrogen storage methods, such as compressed gas or cryogenic liquid, present significant challenges regarding safety, energy density, and infrastructure requirements. The goal is to create a solution to overcome these limitations and enable more widespread adoption of hydrogen as a clean energy carrier.

The primary motivation is to develop a hydrogen generation and storage system that offers higher energy density, improved safety, and greater deployment flexibility than existing technologies. Utilizing a novel chemical approach with the current invention's proprietary Tru-H₂ Fuel, the current invention aims to achieve hydrogen storage densities far exceeding current standards while allowing for stable storage at atmospheric conditions.

Additionally, the current invention recognizes the need for a hydrogen generation system that could be rapidly deployed without requiring extensive infrastructure changes. This would enable the use of hydrogen in various applications and locations where it was previously impractical, thus accelerating the transition to a hydrogen-based economy.

Furthermore, the goal is to create a more environmentally friendly and cost-effective hydrogen production and storage solution. By developing a system that operates at lower pressures, requires less energy for hydrogen extraction, and potentially allows for fuel recyclability, embodiments of the current invention aim to address both the economic and ecological concerns associated with current hydrogen technologies.

The Tru-H₂ hydrogen generation system offers several advantages over existing hydrogen production and storage technologies. First, there is the higher energy density: The Tru-H₂ Fuel achieves over 5.5% hydrogen by weight (including water), far exceeding typical hydrogen storage methods that are less than 2% by weight. This allows for more compact and efficient hydrogen storage.

Second, Tru-H₂ hydrogen generation offers safer storage and transport. Unlike compressed gas or cryogenic liquid hydrogen, Tru-H₂ Fuel can be safely stored and transported at atmospheric conditions, simplifying logistics and reducing safety concerns.

As illustrated in U.S. Pat. No. 3,449,078, the method proposed for generating hydrogen relies on converting hydrocarbons in the presence of steam with a catalyst comprising rhenium with a small amount of alkali metal that is stable for conversion and supported on a carrier. The described invention for hydrogen generation, however, does not propose a compact chemical-mechanical apparatus having any electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 5,514,353, the generation of hydrogen in a novel generator configuration is described using the reaction of alkali, alkali-earth metal hydride with water, overcoming the problem associated with the expansion of the hydride upon its conversion to hydroxide or oxide when reacting with water. The hydride cartridge is housed in a reactor to which liquid water is admitted in a controlled mode. As the water enters the reactor and reaches the hydride cartridge, hydrogen is generated. The described invention for hydrogen generation, however, does not propose a compact chemical-mechanical apparatus having any electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 6,534,033, the method for storing and controlling the release of hydrogen is described using borohydride-based solutions as a hydrogen storage source and a catalyst system to release hydrogen from the borohydride. The described invention for hydrogen storage and generation, however, does not propose a compact chemical-mechanical apparatus having any electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 6,818,334, the method for generating hydrogen is described using two liquid solutions that are mixed together in the presence of one or more transition metal catalysts, where the first solution comprises 5 to 50% weight MBH4 where M is an alkali metal, 5 to 40% weight alkali hydroxide or alkaline metal hydroxide and the balance of water. The second solution comprises 51 to 100% water, with the balance, if any, being a watersoluble additive. The described invention for hydrogen storage and generation, however, does not propose a compact chemical-mechanical apparatus having any electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 6,936,081, the method and apparatus for generating hydrogen from a hydride solution in the presence of a catalyst is described. The hydrogen-generating reactor includes a stack of reactor plates defining reaction chambers alternating with coolant chambers where each reactor plate has a first face defining a solution flow field and an opposing second face defining a coolant flow field, and each solution flow field comprises a common reaction chamber and a plurality of channels opening into the common reaction chamber. Each reaction chamber is configured to receive the hydride solution and to bring at least a portion of the hydride solution in contact with the catalyst. The described invention for hydrogen storage and generation, however, does not propose a compact chemical-mechanical apparatus having any electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 6,939,529, the method for generating hydrogen is described. It self-regulates its own hydrogen generation rate by monitoring one or more parameters of the hydrogen generation process and then providing relative movement between the fuel tank containing one or more complex metal hydrides. The catalyst chamber, containing acid or transition metals (Ru, Co, Ni), increases or decreases the rate of hydrogen generation where the catalyst chamber is disposed in a tank containing the fuel. The relative movement moves the catalyst chamber toward the fuel solution to increase the hydrogen generation rate and away from the fuel solution to decrease the hydrogen generation. The described invention for hydrogen storage and generation, however, does not propose a compact chemical-mechanical apparatus having any electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 6,946,104, a method for chemical hydride hydrogen generation is provided, comprising a storage tank for storing a chemical hydride solution, a reactor containing a catalyst, a pump for supplying the chemical hydride solution from the storage tank to the reactor so that the chemical hydride solution reacts to generate hydrogen in the presence of the catalyst. A second supply line is used to continuously supply the solvent of the solution to the chemical hydride solution during the reaction. The energy system comprises the hydrogen generation system, a fuel cell for generating electricity and water from hydrogen and oxidant, and a separator for recovering the water generated in the fuel cell and feeding it back to the chemical hydride solution during the reaction. The described invention for hydrogen storage and generation, however, does not propose a compact chemical-mechanical apparatus having any electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 7,083,657, a method for hydrogen generation is presented by contacting an aqueous solution of a metal hydride salt with a hydrogen generation catalyst where a recycle line of water condensed from the fluid product to the feed line to be contacted with the catalyst; the internal recycle line permits the use of a more concentrated solution of metal hydride as the recycle line dilutes it before contact with the catalyst. The described invention for hydrogen storage and generation however does not propose a compact chemical-mechanical apparatus having any electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 7,306,780, a method for generating hydrogen from sodium borohydride (NaBH4) is presented where the gas is generated by contacting water with microdisperse particles of sodium borohydride in the presence of a catalyst such as cobalt or ruthenium. The described invention for hydrogen storage and generation, however, does not propose a compact chemical-mechanical apparatus having any electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 7,344,571, a method for generating hydrogen is presented where a housing contains a solid hydrogen source, which can be a hydride, within the housing and an inlet configured to guide fluid to contact the solid hydrogen source. The inlet contacts a wicking region with an affinity for the fluid, and the wicking material can include a hydrophilic material. The hydrogen generator includes a hydrogen gas outlet with a gas permeable membrane, and the inlet is configured to a fluid control system to control fluid flow rate to the solid hydrogen source forming a portable unit. The described invention for hydrogen storage and generation, however, does not propose a compact chemical-mechanical apparatus having any electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 7,393,369, a method and apparatus for generating hydrogen is presented using a controlled chemical reaction between water and a chemical hydride. The invention includes a chemical hydride isolated from water by a water-selective membrane. A fluid containing water is brought into contact with the water-selective membrane and reacts with the chemical hydride. The described invention for hydrogen storage and generation, however, does not propose a compact chemical-mechanical apparatus having any electrical or electromechanical components that enable hydrogen (H₂ gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 7,438,732, a method for implementing a hydrogen generator cartridge is presented where the hydrogen generator system cartridge contains an anhydrous chemical hydride reactant. A plurality of small-diameter liquid conduits along the length of the cartridge serve as liquid distribution apertures. The described invention for the hydrogen generator cartridge, however, does not propose a compact chemical-mechanical apparatus having any electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 7,481,858, a method for implementing hydrogen-generating fuel cell cartridges is presented using a reaction chamber having a first reactant, a reservoir having an optional second reactant, and a self-regulated flow control device that stops the flow of reactant from the reservoir to the reaction chamber when the pressure of the reaction chamber reaches a predetermined level. The described invention for the hydrogen generator cartridge, however, does not propose a compact, chemical-mechanical apparatus having no electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 7,513,978 is presented as a method for generating hydrogen based on an electro-galvanic hydrogen generator system with two or more anode materials, including a cathode material and an electrolyte. The electrolyte comprises a metal hydride, at least one stabilizing agent, and a solvent and the hydrogen gas is generated whenever an anode material and the cathode material are electrically connected. The described invention for hydrogen storage and generation, however, does not propose a compact, chemical-mechanical apparatus having no electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 7,530,931, a method for generating hydrogen consists of a fuel container, a spent fuel container, a catalyst system, and a control system for generating hydrogen using a hydride solution such as sodium borohydride (NaBH4). The described invention for hydrogen storage and generation, however, does not propose a compact, chemical-mechanical apparatus having no electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 7,594,939, a method for storing and generating hydrogen is presented utilizing a solid chemical hydride fuel selected from the group consisting of sodium borohydride, lithium borohydride, magnesium hydride, and calcium hydride where the fuel is encapsulated in a plurality of removable capsules that can be pumped. The described invention for hydrogen storage and generation however, does not propose a compact, chemical-mechanical apparatus having no electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 7,641,889, a method and apparatus for generating hydrogen is presented by applying water to a hydrogen-containing composition such as hydride in the presence of a catalyst that promotes hydrolysis to generate hydrogen in a controlled manner. The amount of catalyst present controls the rate of the hydrogen generation passively, or the rate of hydrogen generation is controlled actively by using a lot of catalysts, in which case the rate of water addition to the hydride controls the reaction. The described invention for hydrogen storage and generation, however, does not propose a compact, chemical-mechanical apparatus having no electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 7,803,349, a method and apparatuses for producing high-purity hydrogen from water are provided using chemical compositions. Metals or alloys, preferably aluminum, capable of reacting with water and producing hydrogen in aqueous solutions at ambient conditions are reacted with one or more inorganic hydrides capable of releasing hydrogen in aqueous solutions at ambient conditions, one or more transition metal compounds are used to catalyze the reaction. The described invention for hydrogen storage and generation, however, does not propose a compact, chemical-mechanical apparatus having no electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 7,858,068, a method of storing and generating hydrogen for fuel cell applications is presented comprised of a dry, solid-state hydrogen fuel source comprising a solid metal hydride or chemical hydride and a reaction-controlling agent in a solid state, wherein the hydride and the reaction-controlling agent are mixed at a desired proportion, delivering a desired amount of a liquid reactant to contact and react with the solid-state fuel source to produce hydrogen gas continuously or intermittently to the fuel cell. The described invention for hydrogen storage and generation, however, does not propose a compact, chemical-mechanical apparatus having no electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

As illustrated in U.S. Pat. No. 7,951,349 describes a method and system for storing and generating hydrogen. A metal or metal hydride compound is reacted with high-temperature steam in a reaction chamber to yield hydrogen gas (H₂) and a metal oxide. The preferred metal is magnesium, which reacts with steam to produce hydrogen. The heat generated in the exothermic reaction drives the dehydrogenation reaction of a hydrogen-containing compound such as a metal hydride. The described invention for hydrogen storage and generation, however, does not propose a compact, chemical-mechanical apparatus having no electrical or electromechanical components that enable hydrogen (H₂) gas to be generated safely, on-demand, at the time and point of use in small or large quantities using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

Note that the above methods and apparatuses for storing and generating hydrogen gas do not envision nor describe a compact, efficient hydrogen generator using precisely controlled release of water into specific fuel system (namely, Tru-H₂) that enable hydrogen (H₂) gas to be generated safely, on-demand, at the time and point of use in small or large quantities, using the chemical reaction resulting from water (H₂O) in a liquid state being added directly to solid sodium (Na) metal in a controlled manner to liberate hydrogen (H₂) gas from the water and produce sodium hydroxide (NaOH) byproduct which can be recycled in an environmentally clean manner by electrolysis to recover the sodium (Na) metal for repackaging and reuse in generating hydrogen.

In accordance with one prior art embodiment of the Tru-H₂ hydrogen generation system described in U.S. Patent No. 8,152,873B2, there is a continuous operation of the reaction at low pressures, variable hydrogen flow rate up to 600g H₂/hr, >2% weight of H₂ storage efficiency. These prior art methods of using Tru-H₂ to create hydrogen used continuous low pressures for extended times. The basic operating principle used a water stream that is driven from the reaction chamber into the mixing chamber.

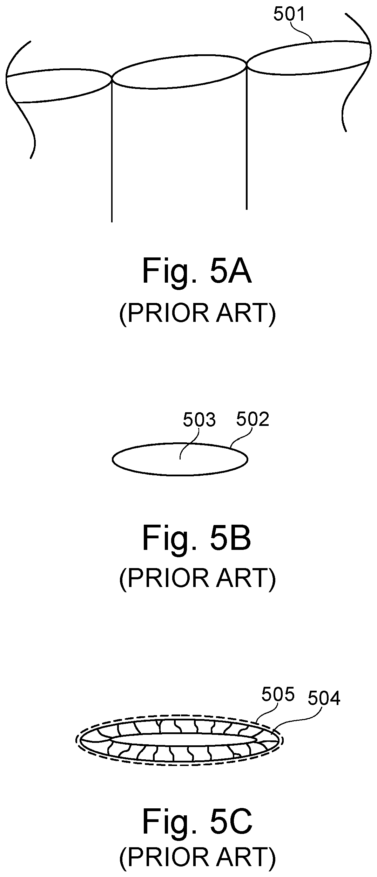

Previous efforts to distribute water into hydrogen generator chambers involve pouch water distribution systems. Hydrolysis of a solid hydride typically only allows for water to penetrate so far into a solid before dynamics of water percolation and product generation effectively cut off water transport to reactants thus cutting off full utilization of H₂ release. Earlier state of the art utilized "pouches" or cells to regulate this distance and prevent too much solid from forming based on optimized distances based on chemical formulation of fuel. U.S. Patent 8,357,213 shows the pouch water distribution systems that is reflected in FIGS. 5A-5C. Water is introduced to the outside of the pouch and is allowed to percolate to the center of the pouch at the optimized distance. The pouches utilize a plurality of cavities (501) and sheets (502) directed outward from midpoint (503). During the reaction of the hydride and the liquid reactant a clumping and gumming layer (504) begins to form as shown in the cross-sectional view (505).

Construction of these pouches is challenging, and the pouches limit the amount of heat that can be removed from the system based on the heat transfer rates of the reacted powders and pouches. Thus, reducing the H₂ production performance that can be extracted at any one time from the system.

In the prior art methods, Tru-H₂ Fuel is fed into the mixing chamber via a fuel hopper sized for the intended application. The system can be designed for higher operating pressures as required for the specific end-use. As the fuel is combined with the water, hydrogen generation begins. The hydrogen is removed from the generation chamber, and the water is circulated back through the circulation loop. Spent fuel is cycled through a fuel reclamation pod, which stores it for future recovery and disposal. Then, the fuel hopper and reclamation pods are removed and replaced with new hoppers, and the cycle continues. Some heat is generated during this production process, and a separate thermal control loop is activated to remove it from the system.

**Table 1. Prior Art System Design Specifications**

| **Specification** | **Value or Range** | **Notes** |
|---|---|---|
| **H₂ Flow Rate** | Variable capable up to 600g H₂/hr | 10kW electrical production from a Fuel Cell |
| **H₂ Operating Pressure** | <15 psig | |
| **System Operating Temperatures** | 32°F-104°F (0°C to 40°C) | -20°F to 140°F (-30°C to 60°C) with additional design support |
| **Time from Start to Full H₂ Production** | <2 minutes | |
| **Time from Stop to H₂ Production Shut Down <10g/hr. Production** | <2 minutes | |
| **Energy Storage On Board** | 5kg H₂ | 8 hours of operation at 10kW |
| **Energy Storage Fuel Pod** | 45kg H₂ | 72 hours of operation at 10kW currently in development |
| **Power Requirements** | 120VAC 15A circuit | currently consumes 600W |

This prior art system is intended to be modular, and additional systems can be run in parallel to gain greater hydrogen generation capability. In use, there is a primary hydrogen generation system and a fuel pod for extended-run operation.

The present invention takes the prior art methods and optimizes the performance using new design elements and specification details that results in much higher efficiency, and unexpected speed times, purity, less complexity, cost savings in overall equipment use, and efficiency performances. is optimized around a set of specifications designed to operate under certain pressure vessel requirements to reduce system cost and the complexity of certifications.

### Summary of the Invention

The present invention describes a hydrogen generation system with controlled water distribution. In accordance with embodiments of the current invention, a hydrogen generation system with controlled water distribution is disclosed. The system comprises a reaction chamber containing a hydrogen-producing fuel, a water distribution mechanism, and a control system. The water distribution mechanism includes a rotating arm with water injection ports that move vertically through the fuel chamber. This allows for precise and efficient water delivery to unreacted fuel, optimizing hydrogen production.

The system utilizes a proprietary fuel blend, Tru-H₂ Fuel, which contains hydrogen-producing chemicals like sodium borohydride. When water contacts this fuel, hydrogen gas is released. The rotating arm's design ensures even water distribution, preventing over-saturation and allowing for efficient use of the entire fuel volume.

A key feature is the arm's controlled vertical movement, achieved through a screw mechanism that adjusts the arm's height as it rotates. This creates a spiral water distribution pattern, maximizing fuel utilization and reaction efficiency. This rate of climb produces water distribution locations at very small increments allowing for more effective water delivery throughout available hydride. The system also incorporates heat management features, using the water distribution arm to aid in heat dissipation.

The control system regulates water injection rates, arm rotation speed, and vertical movement to optimize hydrogen production based on demand. This allows for variable hydrogen output and efficient fuel consumption. The system operates at low pressures and can be scaled to different sizes for various applications.

Overall, this invention provides a safer, more efficient method of on-demand hydrogen generation than traditional storage methods, enabling widespread adoption of hydrogen technology across multiple sectors. The main reaction that is utilized in one embodiment of the current invention is:

NaBH₄ + 4H₂O -> NaBO₂·2H₂O + 4H₂

Although NaBH₄ is currently described in this disclosure for purposes of describing Tru-H₂ Fuel, embodiments of the current invention do not limit the use of other compounds, including but not limited to other borohydrides, such as potassium borohydride or lithium borohydride. Further, the Tru-H₂ fuel can utilize additional chemical additives to promote full and responsive hydrogen generation of the base chemistry.

Several key factors in the current hydrogen production and storage landscape motivated the development of the Tru-H₂ hydrogen generation system. Traditional hydrogen storage methods, such as compressed gas or cryogenic liquid, present significant challenges regarding safety, energy density, and infrastructure requirements. Embodiments of the current invention allow a solution to overcome these limitations and enable more widespread adoption of hydrogen as a clean energy carrier.

The primary motivation is to develop a hydrogen generation and storage system that offers higher energy density, improved safety, and greater flexibility in deployment compared to existing technologies. Utilizing a novel chemical approach with the current invention's proprietary Tru-H₂ Fuel aims to achieve hydrogen storage densities far exceeding current standards while allowing for stable storage at atmospheric conditions.

Tru-H₂ Fuel is not dependent on temperature or pressure for hydrogen release and has a wide temperature operating range. It can be configured to operate in environments ranging from -20°F to 140°F (-30°C to 60°C) without additional additives. It can operate at design pressures from atmospheric storage pressure to pressures in the multiple thousands of pounds.

Tru-H₂ Fuel is highly stable in a dry-protected form (when the chemistry is prevented from exposure to water). Fuel chemistry has been demonstrated to have an extended period of shelf life. Testing has been demonstrated with little to no fuel degradation with fuel produced 13 years ago.

Tru-H₂ Fuel has been optimized through years of development. It has been proven to produce pure humidified hydrogen gas at 99.999% purity with additional amounts of water vapor due to the production process. It has been demonstrated in multiple different manufacturers' fuel cells, showing effectiveness for use in all applications. Thousands of hours of runtime have also shown Tru-H₂ Fuel to be effective as a fuel source for hydrogen fuel cells.

Additionally, a hydrogen generation system that could be rapidly deployed without requiring extensive infrastructure changes is needed. This would enable the use of hydrogen in various applications and locations where it was previously impractical, thus accelerating the transition to a hydrogen-based economy.

Furthermore, creating a more environmentally friendly and cost-effective solution for hydrogen production and storage is advantageous to the costly traditional methodologies of energy production. By developing a system that operates at lower pressures, requires less energy for hydrogen extraction, and potentially allows for fuel recyclability, embodiments of the current invention answer both the economic and ecological concerns associated with current hydrogen technologies.

Tru-H₂ Fuel achieves greater than 5.5% by weight H₂ for its fuel with all components (fuel, additives, and water included). Excluding water (water sourced externally or partially reclaimed from a fuel cell exhaust), Tru-H₂ Fuel achieves 10.6% by weight H₂. This fuel blend far outpaces current hydrogen storage technology, typically less than 2% by weight. The current invention is working with additional blends that show even higher efficiency in weight, achieving greater than 6% by weight H₂.

Unlike other hydrogen generation systems, the current Tru-H₂ is an on-demand hydrogen generation system. The system produces hydrogen as needed, eliminating the need for large-scale hydrogen storage infrastructure and reducing energy losses associated with long-term storage. Additionally, there is a wide operating temperature range. The system can function from -20°F to 140°F without additional modifications, providing flexibility for various environments and applications. This system also has the benefit of rapid startup and shutdown: The system can reach full hydrogen production in under 2 minutes and shut down to minimal production in less than 2 minutes, offering responsive performance.

There is additionally the important aspect of safety. Embodiments of the current invention operate at low pressure. In accordance with one embodiment of the invention, the system operates at pressures below 15 psig. In a further advanced model of a higher production system, even those can operate below 75 psig, reducing risks and infrastructure requirements compared to high-pressure hydrogen storage. Embodiments of the current invention can also operate under a wide variety of operating pressures. Although specific embodiments of the current invention disclose operations that is performed from atmospheric pressures to 75 psig, higher pressure systems can be implemented based upon design requirements of the fuel cell or internal combustion engine.

The system also allows for modular and scalable design capabilities. Multiple units can be combined to increase hydrogen generation capacity, providing flexibility for various applications and easy scaling. In accordance with another embodiment of the invention, fuel recyclability is possible. The spent fuel may be reclaimed, repurposed, or potentially regenerated, offering environmental benefits and potential cost savings.

The hydrogen output is pure, more pure than other prior art hydrogen-producing capabilities. The system produces 99.999% pure hydrogen gas, suitable for fuel cells and other high-purity hydrogen applications. The Tru-H₂ Fuel comprises a proprietary blend of hydrogen-containing chemicals, primarily sodium borohydride (NaBH₄), a well-calculated source of selected water and additives. More specifically, the proprietary blend includes high hydrogen content (>5.5% by weight, including water, 10.6% excluding water) that is stable for storage at atmospheric conditions and capable of simple operations within the temperature range of -20°F to 140°F.

Sodium borohydride is designated by the Department of Transportation as 4.3 dangerous when wet. This is due to the reaction with water that will release hydrogen, a flammable gas. A Safety Datasheet has been prepared for Tru-H₂ Fuel, and a summary of the chemical combination is shown. Other known products produced by the reaction are mild in hazard and not known to cause environmental issues. No other chemicals are known to have formed, and analysis of volatile organic compounds (VOCs), Semi-VOCs, organochlorine pesticides, and polychlorinated biphenyls (PCBs) have all been tested by third-party labs and were not detected.

In accordance with another embodiment of the Tru-H₂ hydrogen generation system, there exists a simpler modular design, a higher energy density (>4% weight of H₂, >3% volume of H₂ per liter), faster response times, and lower build complexity and costs.

The technology aims to provide safer, more efficient hydrogen storage and generation than current methods, enabling rapid deployment of hydrogen infrastructure without significant capital investment.

### Brief Descriptions of the Drawings

The following detailed description of the embodiments of the invention will be more readily understood when taken in conjunction with the following drawings, wherein:
FIG. 1 is a schematic diagram of hydrogen generator in accordance with the current invention.
FIG. 2 is a schematic diagram of hydrogen generator from an outside construction view.
FIG. 3 is a schematic diagram of a topical view of the generation chamber.
FIG. 4 show topical and side view schematic diagrams of the double D screw in accordance with embodiments of the current invention.
FIGS. 5A, 5B, and 5C are representations of hydrogen generation components used in previous methods and are labeled "PRIOR ART."
FIG. 6 is a schematic diagram of the side view of the overall chamber system in operation.
FIG. 7 is another schematic diagram of the side view of the overall chamber system in operation.
FIG. 8 is a schematic diagram showing the bottom view of the hydrogen chamber.
FIG. 9 is a schematic diagram showing the detailed breakdown of the rotating liquid delivery mechanism.
FIG. 10 is a schematic diagram showing the rotating drive system.
FIG. 11 is a schematic diagram showing the rotational view of the lead screw.
FIG. 12 is a schematic diagram showing the threaded drive screw with double D flats.
FIG. 13 is a schematic diagram showing the threaded drive screw with double D flats.

### DETAILED DESCRIPTION OF PREFERRED EMBODIMENTS

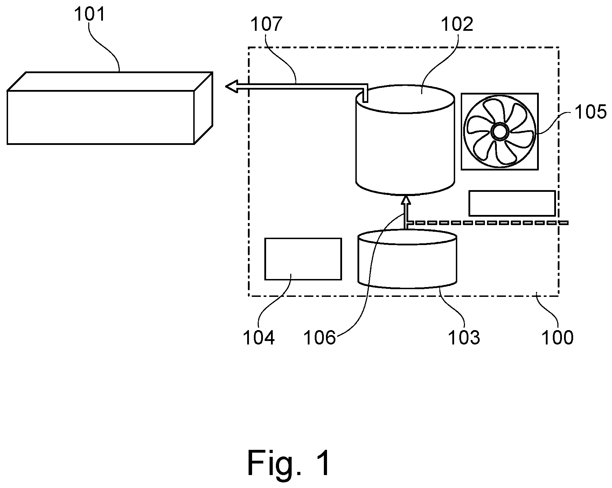

Figure 1 illustrates a schematic diagram of the hydrogen generation system. The main components are enclosed within a dashed boundary labeled as 100. Key elements include the generation chamber (102), liquid storage for water or aqueous solution (103), process controller (104), fan (105), liquid injection mechanism (106), and hydrogen output (107). As required, an additional post-processing unit (101) is shown for de-humidification, compression, or liquefaction.

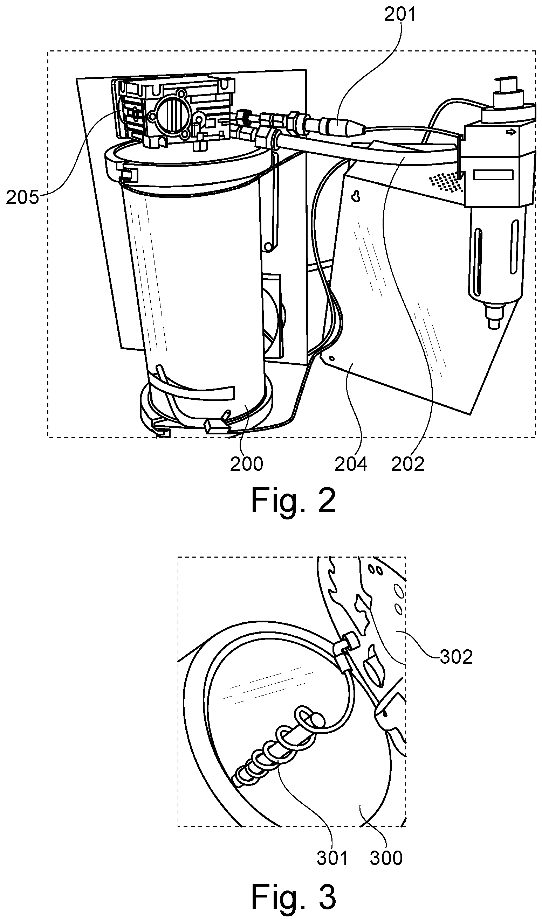

Figure 2 illustrates a schematic diagram that provides a more detailed view of the generation chamber and its associated components. It shows the generation chamber (200), pressure transducer (201), hydrogen output (202), process controller (204), and rotational drive motor (205). A post-hydrogen conditioning unit (203) for de-humidification is also depicted (excluded from the main apparatus).

In one embodiment of the invention, a system that takes advantage of many of these advanced concepts and immediate gains in energy density is disclosed. The system simplifies design operation by reversing the fuel and water interaction method from prior art methods. The methods and specifications for this embodiment starts with the introduction of Tru-H₂ Fuel that is placed into a specially designed hydrogen generation chamber (200). Water from a reservoir or aqueous solution (103) is injected via a pump into the generation chamber (200) and distributed across the generator chamber (200) in a controlled manner to distribute water evenly, ensuring a uniform use of Tru-H₂ Fuel. The evenly controlled manner by which Tru-H₂ Fuel and aqueous solution (103) is combined is determined by controller (104). The water is combined with the fuel in a precisely controlled manner using a drive motor (600,700) in accordance with one embodiment of the current invention. As the fuel is combined with the water or aqueous solution (103), it begins to generate hydrogen. The hydrogen is removed from the generation chamber (102) through the hydrogen output (107), and the remaining precipitated solids are stored within it for later repurposing or recycling in the post-processing unit (101). Some heat is generated during this production process, and fan (105) is placed outside the hydrogen generation chamber to remove this heat. The following specification in Table 2 shows the conditions by which controller (104) and the hydrogen generator chamber (102) is used to produce the proper conditions that results in the hydrogen generation.

**Table 2. System Design Specifications of the Current Invention**

| **Specification** | **Value or Range** | **Notes** |
|---|---|---|
| **System Size** | Smallest Size: 7.75"W X 8.25"L X 15.5"H - 0.5kg H₂ Storage Capacity (8kWhrs) Largest Size: 13.8"W X 15.1"L X 42"H - 6kg H₂ Storage Capacity (95kWhrs) | Sizing includes all Tru-H₂ Fuel and H₂O requirements |
| **H₂ Flow Rate** | >150g to 600g H₂/hr | 2kW - 10kW larger modules have higher flow rates |
| **H₂ Operating Pressure** | <75 psig | Can be configured for other operating pressures |
| **System Operating Temperatures** | -20°F to 140°F (-30°C to 60°C) | |
| **Time from Start to Full H₂ Production** | <2 minutes | |
| **Time from Stop to H₂ Production Shut Down** | <10g/hr. production: <2 minutes | |
| **Energy Storage On Board** | configurable up to 6kg H₂ (>8 hours of operation at 10kW) | |
| **Modularity** | Combine multiple units to work in tandem | The system is intended to be modular, and additional systems can be run in parallel to gain greater hydrogen generation capability and storage. |
| **Power Requirements** | 24VDC <100Watts | 12VDC to 48VDC available on request |

In accordance with this embodiment of the current invention, the hydrogen system is designed to provide high-energy density storage in a safe and clean way. A single unit is anticipated to achieve energy densities above 4% weight of H₂ and volumetric densities of over 3% kg H₂ per liter. It can be configured for different amounts of hydrogen per module, delivering large quantities of hydrogen as required. This represents a large increase in storage density compared to other embodiments of the current invention and the allowance of more units and even higher capabilities compared to other existing hydrogen storage technologies.

Figure 3 is a schematic drawing that shows the top portion of the pressure vessel or generation chamber (300). It highlights the collapsible liquid injection tube (301) and the generation chamber top (302). As shown, Figure 3 shows how the collapsible liquid injection tube (301) surrounds the lead screw.

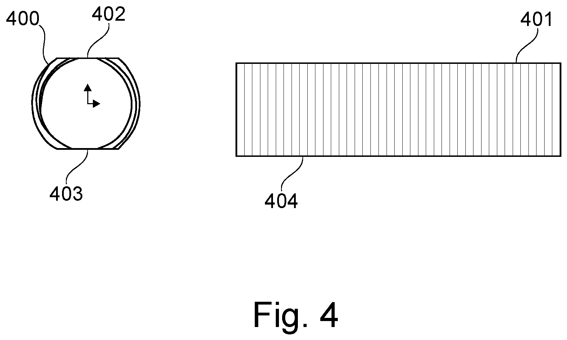

Figure 4 presents different views of the lead screw mechanism. It shows a cross-sectional view (400) and a side view (401) of the lead screw, highlighting the first flat side (402), the second flat side (403) that produces a double D cross-sectional view. The flat side view (402) shows lines (404) that are indicative of ridges that are used to lower and raise the liquid delivery mechanism (606/704).

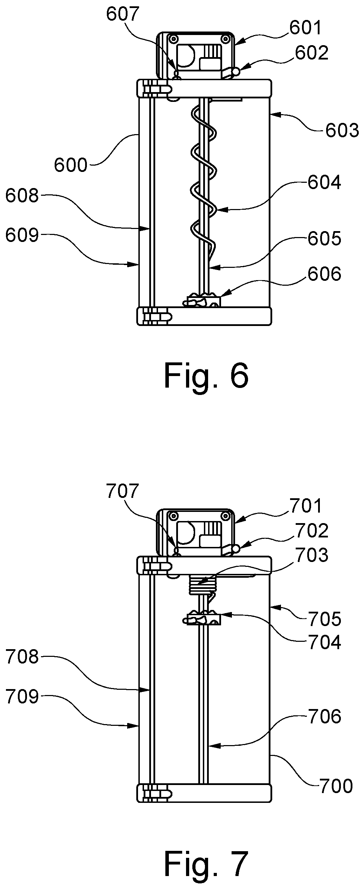

Figures 6 and 7 are schematic depictions of the hydrogen chamber system (200, 600, 700) in different operational states. Figure 6 represents a side view of the hydrogen chamber system (600) having a generation chamber vessel (603) wherein the liquid delivery mechanism 606 is at the bottom of hydrogen chamber system (600). Figure 7 represents a side view of the hydrogen chamber system (700) having a generation chamber vessel (705) wherein the liquid delivery mechanism (704) is at the top of the hydrogen chamber system (700). The controller (400) is programmed to provide precise instructions to the rotational drive motor (601/701) that uses the double D screw thread or lead screw (400, 605, 706) to precisely control the level of water that is being introduced into the liquid injection tube (604/703). The screw thread (400) rotates in a precise manner that coils the liquid injection tube (604/703) in either a wrapped coil in Figure 7 or unwound in Figure 6. Once the hydrogen is generated, hydrogen exits the hydrogen chamber system (600/700) through hydrogen output (602/702). The process is also controlled in a precise manner using rotating liquid delivery mechanism (606/704) that rotates the lead screw (400, 605, 706) and rotational climbing lock (608/708) that is used to lock the lead screw rotational capabilities.

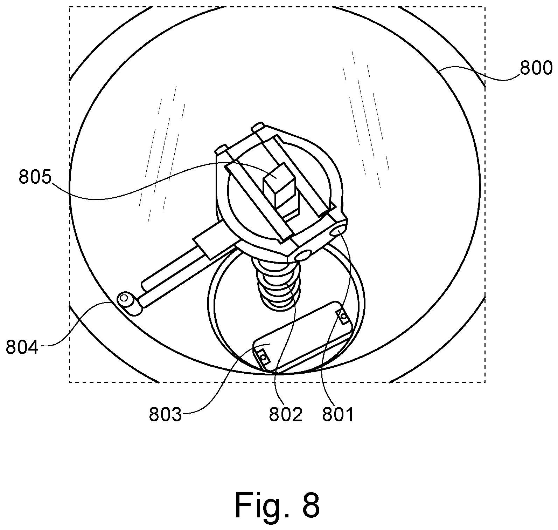

Figure 8 provides a bottom view of the chamber (800), showcasing the rotating liquid delivery mechanism (801), liquid injection tube (802), hydrogen output filter (803), and rotational climbing lock (804).

According to one embodiment of the invention, the hydrogen generation chamber (200) includes an internal nut, which is indexed to a liquid delivery mechanism (606/702). As the lead screw (400, 605, 706) rotates, the internal nut transfers rotational energy to the outer liquid delivery mechanism. A locking element or rotational climbing lock (608/708) allows the liquid delivery mechanism (606/702) to lock external to the shaft allowing the liquid delivery mechanism (606/702) to travel in a vertical direction.

In another embodiment of the current invention, there is a planetary gear mechanism, which transfers rotational action from the inner geared nut to a counter rotating external liquid delivery arm. In this embodiment the gear ratio can be adjusted to allow the rotation of the liquid delivery arm to be different than the rotation rate of the lead screw allowing for more precise liquid delivery per rotation. An internal nut is indexed to the liquid delivery arm. And as it turns, the liquid delivery arm locks into a side shaft wheel, which is also called the locking shaft. The locking shaft prevents the liquid delivery arm from turning, which then causes the nut to travel upward, or vertically.

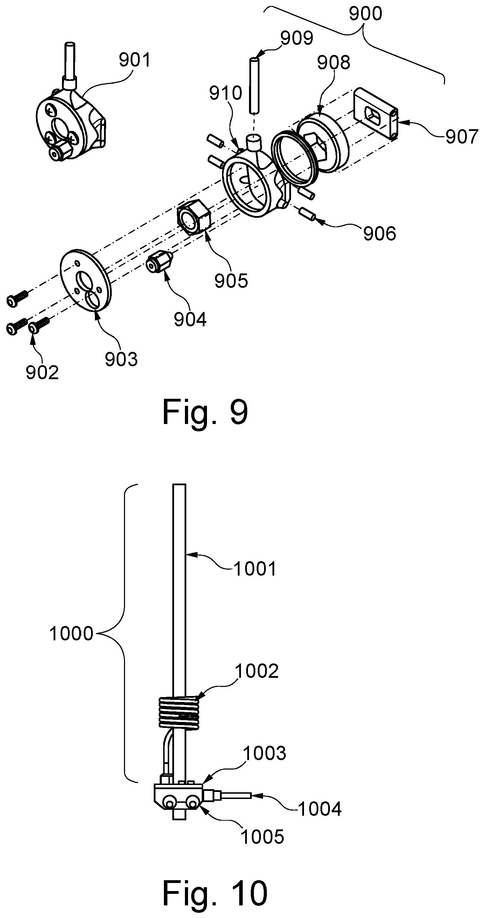

Figure 9 offers a detailed breakdown of the rotating liquid delivery mechanism and its components. Rotating liquid delivery mechanism, breakout system (900) uses collapsed assembly screws (901 and 902). The embodiment of this current invention includes an anti-rotation locking plate (903) and a liquid injection connection (904). A main component in this embodiment is the threaded nut (905), which utilizes retention pins (906). The system includes rotation cam (907), rotational seal port (908), liquid injection dispensing tubing/ports (909), and outer seal rotational port (910). In accordance with one embodiment of the current invention, outer seal rotational port (910) and rotational seal port (908) will counter-rotate as the drive mechanism is rotated to provide both climbing action of threaded nut (905) moving up the threaded screw. Rotation cam (907) proves the rotational locking of outer seal rotational port (910) to the rotation of the threaded screw

Figure 10 illustrates the rotating drive system (1000), featuring the drive screw with double D flats (1001), liquid injection tube (1002), anti-rotation locking plate (1003), liquid injection dispensing tubing/ports (1004), and rotating liquid delivery mechanism (1005).

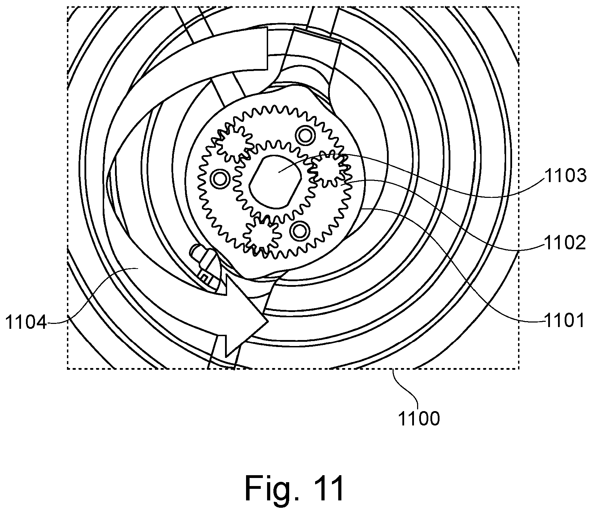

Finally, Figure 11 presents a rotational view of the lead screw (1100), highlighting the rotating liquid delivery head (1101), planetary gears (1102), indexed lead screw (1103), and rotational direction angle (1104).

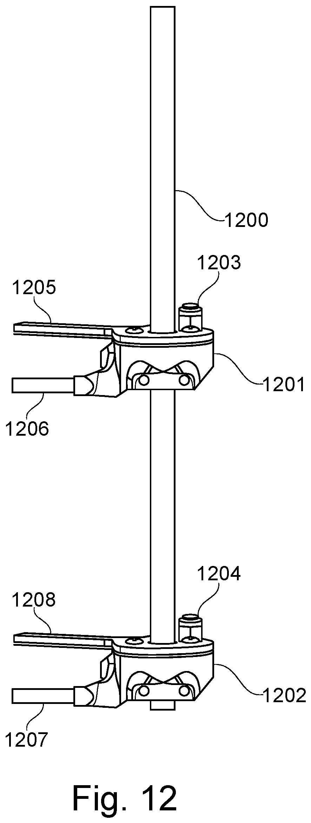

Figure 12 is a schematic drawing showing a threaded screw drive in accordance with one embodiment of the current invention. A key component to the current embodiment includes the threaded drive screw system (1200) that utilizes the shape of double D flats when viewed from a cross-sectional view of the screw. The threaded drive screw (1200) includes a first water distribution manifold (1201) that is used to control the water input into the generation chamber (200). This threaded drive screw system (1200) includes a second water distribution manifold (1202) for the precise control of water at the bottom of the generation chamber (200). Attached to the first water distribution manifold (1201) and a second water distribution manifold (1202) are a first water input (1203) and second water input (1204). Each of first water input (1203) and second water input (1204) are connected to a collapsible tubing system (not shown). The combined first and second water inputs (1203, 1204) are used to precisely control the flow and the water volume into the hydrogen generation chamber (200).

The threaded drive screw system (1200) includes a water distribution arm (1206). The water distribution arm (1206) includes micro-holes that are used to control the water input and the flow rate of water into the generation chamber (200). The water distribution arm (1206) also includes an anti-rotation arm (1205) for the purposes of controlling the reverse rotation of the arm, which is needed to control the level of water and flow of water entering the hydrogen generation chamber (200). As shown, the threaded drive screw system (1200) also includes a second water distribution arm (1207) that is used to control the water input into the hydrogen generation system (200).

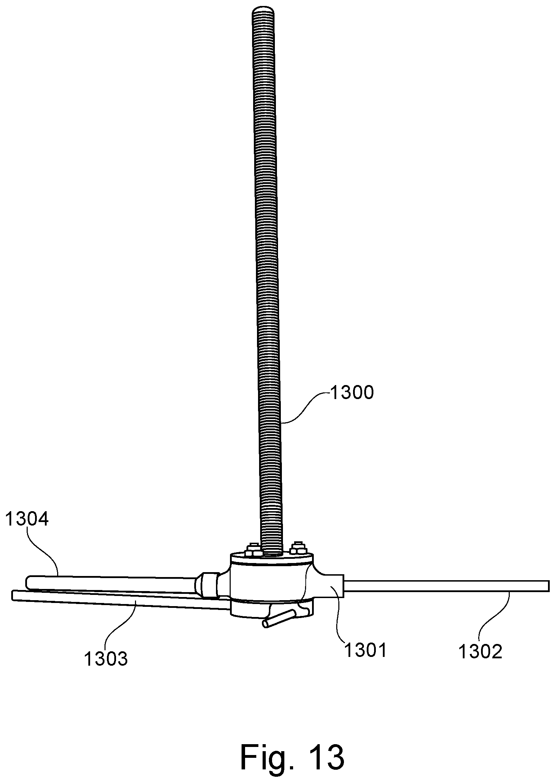

Figure 13 shows a schematic drawing of a side view of threaded drive screw (1300) where the ridges of the screw are shown. The threaded drive screw (1300) includes a water distribution manifold (1301) that rotates around the threaded drive screw (1300) to raise or lower the water distribution arms (1302, 1304). In one embodiment of the current invention, the water distribution manifold (1301) is rotated clockwise by the rotational drive motor (205) that raises both water distribution arms (1302, 1304). By reverse, the water distribution manifold (1301) is rotated counterclockwise by the rotational drive motor (205) to lower both water distribution arms (1302, 1304). Both first water distribution arm (1302) and second water distribution arm (1304) contain micro-holes that controllably release water into the hydrogen generation chamber (200). If the water distribution manifold reaches the bottom of the hydrogen generation chamber (200), there is an anti-rotation arm (1303) that stops the rotation capabilities of the threaded drive screw 1300 and the water distribution manifold (1301).

Regenerating sodium borohydride from sodium metaborate (NaBO₂) is another embodiment of the current invention that allows for the recyclability of the starting materials. The process is performed using a low-energy ball milling process (not shown)]

The current invention demonstrates hydrogen production systems that take hydrogen storage and production far beyond current technology capabilities today. Using proven optimized Tru-H₂ Fuel, Tru-H₂ systems are safer to operate, run at lower pressures, have a reduced storage footprint, and extended service life. The current invention demonstrates fully capable systems that decrease the weight, volume, and footprint capabilities of current hydrogen storage methods, with Tru-H₂ Fuel demonstrating fuel densities greater than 5.5 wt% H₂ content. Next-generation products are currently in development and have shown a large increase in weight and volume of hydrogen densities, which will far outpace competitors within the hydrogen storage market.

These systems do not require large infrastructure changes and can be deployed rapidly and at a reduced cost to other systems, such as those utilizing water electrolysis. This fuel allows for efficient pathways to hydrogen deployment in areas without hydrogen infrastructure, paving the way for hydrogen to be used in multiple applications without large capital investment.

The Tru-H₂ hydrogen generators utilize Tru-H₂ Fuel to deliver high-density hydrogen production on demand, with simplified deployment logistics and added safety. Two major systems are currently in development. In one embodiment of the current system, there is a system that is capable of generating dynamic rates of hydrogen in large quantities for bulk applications with hydrogen energy densities over 2%, and one embodiment of the current system has consolidated and simplified operation, allowing for increased hydrogen storage density in both volumes (over 3%) and weight (over 4%), and allows for fast deployment and integration with fuel cells and other applications.

By still utilizing the high-energy storage potential of Tru-H₂ Fuel, the current invention adds all the benefits while still achieving high-energy density storage in a safe and clean way. For example, a single unit with an attached fuel pod is anticipated to achieve >2% weight of H₂ for the system and much higher for individual fuel pods.

This embodiment of the current invention involves tests that have demonstrated faster hydrogen generation response times, greater energy storage densities by weight and volume, and a reduction in build complexity and costs compared to even earlier Tru-H₂ systems, which, in accordance with the current invention tests, outperforms current hydrogen storage and generation technologies in the market today. These improvements will allow faster deployment for specific customer applications and meet market demand for the emerging hydrogen energy infrastructure markets.

The Tru-H₂ Fuel composition could be modified to include different hydrogen-containing chemicals or additives. In accordance with one embodiment of the invention, Tru-H₂ Fuel composition can use potassium borohydride (KBH₄) instead of sodium borohydride (NaB H₄) as the primary hydrogen-producing compound. In addition, the fuel can incorporate different stabilizing additives to enhance its shelf life or reaction kinetics further. Another variation of the fuel source allows for adjusting the ratio of water to borohydride to optimize hydrogen yield or reaction rate for specific applications.

In another embodiment of the current invention, the water distribution system is adapted to implement multiple rotating arms within the reaction chamber at different heights to increase water distribution efficiency. The shape or number of water injection ports on the distribution arm can also be varied to optimize water dispersion. Additionally, in accordance with another embodiment of the current invention, a pulsed water injection system is incorporated to control reaction rates more precisely.

Other embodiments contain heat management system modifications to improve efficiency or adapt to different operating conditions by integrating a phase-change material into the reactor walls to absorb excess heat during peak production. In accordance with another embodiment of the invention, the system implements a thermoelectric cooling system to convert waste heat into usable electricity. Yet, in another embodiment of the current invention, a variable-speed fan system adjusts cooling based on real-time temperature measurements. Various heat management systems can provide alternative ways of removing heat, and alternatives can include such techniques as using phase change materials or other types of materials for heat management.

In another embodiment of the current invention, the shape and configuration of the reactor chamber could be modified to optimize performance. The system contains a cylindrical reactor with a spiral water distribution system that moves vertically. In doing so, a modular reactor is created with stackable chambers for scalable hydrogen production. In another embodiment of the current invention, a dual-chamber design is implemented where spent fuel is automatically transferred to a separate compartment.

In another embodiment of the current invention, the control systems could be upgraded to improve performance and user interaction. Machine language algorithms optimize water injection rates based on historical performance data. The system utilizes a smartphone to monitor and control hydrogen production remotely. The system may also include integrated sensors to detect fuel quality, and the sensor data is used to adjust operating parameters for optimal performance automatically.

This embodiment of the current invention could be utilized for portable power generation in remote field operations such as geological surveys, archaeological excavations, or disaster relief efforts. Its compact size, modularity, and ability to operate in a wide temperature range (-20°F to 140°F) make it ideal for providing reliable power in areas without established infrastructure. The system's rapid start-up time (<2 minutes) and high energy density would allow field teams to quickly set up and power essential equipment like communication devices, scientific instruments, or medical equipment.

Data centers require an uninterrupted power supply to maintain operations. The Tru-H₂ hydrogen generation system could be a reliable backup power source, replacing or supplementing traditional diesel generators. The system's ability to produce hydrogen on-demand, coupled with fuel cells, would provide clean, quiet, and efficient backup power. This embodiment system's modular nature allows scalability to meet the varying power needs of different-sized data centers. Additionally, the high energy density of the Tru-H₂ Fuel would enable longer runtime compared to battery-based backup systems, ensuring data center uptime during extended power outages.

The shipping industry is actively seeking cleaner energy solutions to reduce emissions. The Tru-H₂ hydrogen generation system could be installed on ships to provide auxiliary power for non-propulsion systems like lighting, air conditioning, and onboard electronics. The system's compact design and ability to operate at various pressures make it suitable for integration into existing ship structures. The high energy density of the Tru-H₂ Fuel would allow for extended periods of operation between refueling, which is particularly beneficial for long voyages. Moreover, the system's low operating pressure (<75 psig) enhances safety in the maritime environment.

In accordance with the current invention, the system could be used to establish hydrogen refueling stations in remote areas or regions lacking hydrogen infrastructure. This would enable the adoption of fuel cell vehicles in areas previously considered impractical due to the absence of hydrogen supply. The system's modularity allows for scaling to meet varying demands, while its rapid hydrogen production capability (up to 600g H₂/hr) ensures quick refueling times. The ability to safely store and transport the Tru-H₂ Fuel at atmospheric conditions simplifies logistics compared to compressed or liquefied hydrogen. It is feasible to set up refueling stations in isolated locations.

Telecommunications towers in remote locations often rely on diesel generators for power, which can be costly to maintain and environmentally unfriendly. The Tru-H₂ hydrogen generation system could provide a cleaner, more efficient power solution for these off-grid installations. The system's wide operating temperature range and low maintenance requirements make it suitable for deployment in various climates and isolated areas. The high energy density of the Tru-H₂ Fuel would reduce the frequency of refueling trips, lowering operational costs. The system's quiet operation would also minimize noise pollution in sensitive environments.

In accordance with the current invention, the primary motivation is to develop a hydrogen generation and storage system that offers higher energy density, improved safety, and greater deployment flexibility compared to existing technologies. Utilizing a novel chemical approach with the current invention's proprietary Tru-H₂ Fuel, the invention's current embodiments aim to achieve hydrogen storage densities far exceeding current standards while allowing for stable storage at atmospheric conditions.

The need for a rapidly deployed hydrogen generation system is also recognized without requiring extensive infrastructure changes. This would enable the use of hydrogen in various applications and locations where it was previously impractical, thus accelerating the transition to a hydrogen-based economy.

Furthermore, the goal is to create a more environmentally friendly and cost-effective hydrogen production and storage solution. By developing a system that operates at lower pressures, requires less energy for hydrogen extraction, and potentially allows for fuel recyclability, the current embodiments of the invention address both the economic and ecological concerns associated with current hydrogen technologies.

The development of the current invention's Tru-H₂ hydrogen generation technology was further motivated by the need for a more versatile and adaptable hydrogen production solution. Prior-art hydrogen technologies often required specialized infrastructure or were limited in their deployment options. Embodiments of the current invention create a system that can be easily integrated into various applications and environments, from stationary power generation to mobile and portable use cases.

Challenges of hydrogen storage and transportation have also hindered widespread adoption. By developing a fuel that can be safely stored and transported at atmospheric conditions, the embodiments of the current invention simplify logistics and reduce costs associated with hydrogen distribution. This approach would make hydrogen more readily available in areas lacking established hydrogen infrastructure.

Additionally, embodiments of the current invention improve hydrogen production and utilization efficiency. By designing a system that generates hydrogen on demand, they minimize energy losses associated with long-term storage and reduce the need for energy-intensive compression or liquefaction processes. This approach develops more sustainable energy solutions that maximize resource utilization and minimize environmental impact.

In another embodiment of the current invention systems' compact and modular nature makes it ideal for integration into portable and backup power solutions. These could be deployed in remote locations, disaster relief operations, or as uninterruptible power supplies for critical infrastructure, offering a clean and reliable alternative to diesel generators.

By enabling more widespread and efficient use of hydrogen across multiple sectors, embodiments of the current invention contribute significantly to the global transition towards a low-carbon economy, opening up new markets and creating substantial commercial opportunities in the rapidly growing hydrogen energy industry.

## Claims

1. A hydrogen generation system comprising:
a) a reaction chamber containing a hydrogen-producing fuel;
b) a liquid distribution mechanism comprising a rotating arm with water injection ports;
c) a vertical movement mechanism coupled to the rotating arm;
d) a control system configured to regulate water injection, arm rotation, and vertical movement; and
e) a hydrogen output port.

2. The system of claim 1, wherein the hydrogen-producing fuel comprises sodium borohydride.

3. The system of claim 1 or 2, wherein the vertical movement mechanism comprises a lead screw.

4. The system of claim 1, 2 or 3, wherein the control system is configured to create a spiral water distribution pattern within the reaction chamber.

5. The system of any preceding claim, further comprising a heat management system utilizing the rotating arm for heat dissipation.

6. The system of any preceding claim, wherein the system operates at a pressure below 75 psig.

7. The system of any preceding claim, wherein the hydrogen-producing fuel achieves greater than 5.5% hydrogen by weight including water.

8. A method for generating hydrogen, comprising:
a) providing a reaction chamber containing a hydrogen-producing fuel;
b) introducing liquid into the reaction chamber via a rotating arm with liquid injection ports;
c) controlling the vertical movement of the rotating arm to create a spiral liquid distribution pattern;
d) regulating liquid injection rates and arm rotation speed to optimize hydrogen production; and
e) collecting generated hydrogen gas.

9. The method of claim 8, further comprising dissipating heat using the rotating arm and/or, wherein the hydrogen-producing fuel comprises sodium borohydride and additives for stabilization and enhanced hydrogen production.

10. A modular hydrogen generation system comprising:
a) multiple reaction chambers, each containing a hydrogen-producing fuel;
b) liquid distribution mechanisms in each chamber, each comprising a rotating arm with liquid injection ports and a vertical movement mechanism;
c) a central control system configured to regulate liquid injection, arm rotation, and vertical movement across all chambers; and
d) a combined hydrogen output from all chambers.

11. The system of claim 10, wherein the system is scalable by adding or removing reaction chambers, and/or wherein the hydrogen-producing fuel is stored at atmospheric conditions prior to use, and/or wherein the system achieves full hydrogen production within 2 minutes of startup and/or wherein the generated hydrogen has a purity of 99.999%.

12. A method for generating hydrogen, comprising:
a) providing a reaction chamber containing a hydrogen-producing fuel;
b) introducing liquid into the reaction chamber via a rotating arm with liquid injection ports;
c) controlling vertical movement of the rotating arm within the reaction chamber;
d) regulating liquid injection rates and arm rotation speed to optimize hydrogen production; and
e) collecting generated hydrogen gas.

13. The method of claim 12, wherein controlling vertical movement of the rotating arm creates a spiral liquid distribution pattern within the reaction chamber and/or further comprising dissipating heat using the rotating arm and/or wherein the hydrogen-producing fuel comprises sodium borohydride, and/or further comprising operating the system at a pressure below 75 psig and/or, wherein the hydrogen-producing fuel achieves greater than 5.5% hydrogen by weight including water, and/or further comprising achieving full hydrogen production within 2 minutes of startup.

14. A method for modular hydrogen generation, comprising:
a) providing multiple reaction chambers, each containing a hydrogen-producing fuel;
b) introducing liquid into each reaction chamber via separate rotating arms with liquid injection ports;
c) controlling vertical movement of each rotating arm within its respective reaction chamber;
d) centrally regulating liquid injection rates and arm rotation speeds across all chambers to optimize hydrogen production; and
e) collecting and combining generated hydrogen gas from all chambers.

15. The method of claim 14, further comprising scaling hydrogen production by adding or removing reaction chambers, and/or wherein the hydrogen-producing fuel is stored at atmospheric conditions prior to use, and/or further comprising producing hydrogen gas with a purity of 99.999%.

16. A method for controlled liquid distribution in hydrogen generation, comprising:
a) providing a reaction chamber containing a hydrogen-producing fuel;
b) rotating a liquid distribution arm within the reaction chamber;
c) vertically moving the liquid distribution arm via a lead screw mechanism;
d) injecting liquid through ports in the liquid distribution arm; and
e) controlling the rotation speed, vertical movement, and liquid injection to create a spiral liquid distribution pattern within the fuel.

17. The method of claim 16, further comprising adjusting the liquid distribution pattern based on hydrogen demand, and/or wherein the liquid distribution arm aids in heat dissipation within the reaction chamber, and/or further comprising operating the system at a pressure below 15 psig.
